# EUROPEAN PATENT SPECIFICATION

(11) **EP 3 657 856 B1**
(45) Date of publication and mention of the grant of the patent: **29.06.2022**
(21) Application number: 18207265.2
(22) Date of filing: 20.11.2018
(51) Int. Cl.: H04W 36/00, H04W 36/14, H04W 48/16

(54) **MOBILE COMMUNICATION TERMINAL AND METHOD FOR PERFORMING RADIO CELL MEASUREMENTS**
MOBILKOMMUNIKATIONSENDGERÄT UND VERFAHREN ZUR DURCHFÜHRUNG VON FUNKZELLENMESSUNGEN
TERMINAL DE COMMUNICATION MOBILE ET PROCÉDÉ POUR EFFECTUER DES MESURES DE CELLULES RADIO

(43) Date of publication of application: 27.05.2020
(73) Proprietor: Apple Inc., Cupertino, CA 95014 (US)
(72) Inventor: ESCH, Michael, Santa Clara, CA 95054 (US); SOLIMAN, Ahmed, 90449 Nürnberg (DE); DARWEESH, Tamer, 80992 München (DE); ELIAS, Osama, 90449 Nürnberg (DE); SAYED, Magdy, 90489 Nürnberg (DE)
(74) Representative: Lang, Johannes

(56) References cited:
- WO-A1-2009/021009
- WO-A1-2009/054702
- WO-A1-2015/175225
- US-A1- 2008 176 564

## Description

### Technical Field

Exemplary implementations described herein generally relate to mobile communication terminals and methods for performing radio cell measurements.

### Background

A typical feature of a mobile communication terminal is its capability to move while keeping a connection to a communication network. This is achieved by performing a handover of the mobile communications terminal between radio cells. Since the coverage areas of different radio access technologies typically differ, for example currently LTE (Long Term Evolution) coverage is limited in comparison to GSM (Global System for Mobile Communications) coverage, a mobile communication terminal may search radio cells operated according to different RATs to find suitable candidates for a handover. For the cell search, the mobile communication terminal performs radio cell measurements. However, performing radio cell measurements according to multiple RATs and multiple radio cells may have negative impact on the current communication performance as well as on the power consumption of the mobile communication terminal. Accordingly, efficient approaches for performing radio cell measurements are desirable.

WO 2015/175225A1 relates to a method of wireless communication which includes adaptively modifying a measurement schedule order for a current discontinuous reception cycle. The method also includes receiving system information for two or more cells. The measurement schedule order is based on a priority of a cell associated with a radio access technology, a frequency, or a combination thereof.

US 2008/176564A1 relates to inter-rat measurement control based on connection data rate.

WO 2009/021009 A1 relates to measurements in a wireless transmit receive unit (WTRU) including the WTRU operating in a first radio access technology (RAT), the WTRU receiving a list comprising a plurality of RATs, wherein each of the plurality of RATs is ranked according to a priority, and the WTRU measuring a second RAT based on the priority.

WO 2009/054702A1 relates to a method which includes receiving priority information on priority for different frequency or a Radio Access Technology (RAT), measuring a serving cell periodically, measuring different frequency or RAT with higher priority than the serving cell, and suspending the measurement of different frequency or RAT with the higher priority during a certain time period when a measurement result of the different frequency or RAT with higher priority is lower than a reference value.

### Summary of invention

The invention is defined by the independent claims. Preferred embodiments of the invention are stipulated in the dependent claims. While several embodiments and/or examples have been disclosed in this description, the subject-matter for which protection is sought is strictly and solely limited to those embodiments and/or examples encompassed by the scope of the appended claims. Embodiments and/or examples mentioned in the description that do not fall under the scope of the claims are useful for understanding the invention.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows an exemplary cellular mobile radio communication system.
Figure 2 shows an exemplary radio cell arrangement including radio cells of two communication networks.
Figure 3 shows an example of an operation of a mobile terminal with respect to radio cell measurement.
Figure 4 shows a flow diagram illustrating an example for controlling whether or not to perform 2G (Second Generation) inter-RAT measurements.
Figure 5 shows an exemplary mobile communication terminal.
Figure 6 shows an exemplary method for performing radio cell measurements, for example performed by a mobile communication terminal.

### Description of Exemplary I mplementations

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

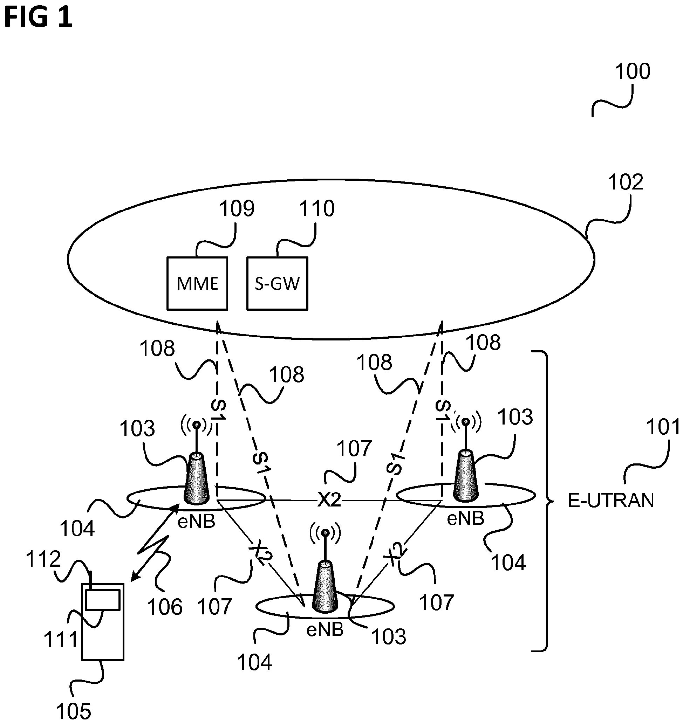

Figure 1 shows a communication system 100, in this example an LTE (Long Term Evolution) communication system.

The communication system 100 includes a network side having a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in a mobile radio cell 104 may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

For radio communication via the air interface 106, the mobile terminal 105 includes a transceiver 111 (which may operate as a transmitter and a receiver) and one or more antennas 112.

In the example of figure 1, the communication system 100 is a communication system according to LTE as an example which includes a network side (i.e. a communication network) having a radio access network 101 operating according to a radio access technology (RAT) according to LTE, i.e. an E-UTRAN, and an LTE core network, i.e. an Evolved Packet Core (EPC). However, according to various embodiments, communication networks according to various communication technologies, e.g. various mobile communication standards, may be used. For example, each base station 103 may provide a radio communication connection via the air interface between itself and the mobile terminal 105 and operate radio cells 104 according to LTE, 5G (Fifth Generation), UMTS, GSM (Global System for Mobile Communications), EDGE (Enhanced Data Rates for GSM Evolution) radio access. Accordingly, the radio access network 101 may operate as an E-UTRAN, a 5G NR (New Radio) radio access network, a UTRAN, a GSM radio access network, or a GERAN (GSM EDGE Radio Access Network). Analogously, the core network 102 may include the functionality of an EPC, a 5GC (5G core, i.e. 5G core network), a UMTS core network or a GSM core network.

In case of a communication network operating according to GSM, the base stations 103 are typically referred as BTS (Base Transceiver Station) and are connected to and managed by a BSC (Base Station Controller) which is part of the radio access network 101. The core network 102 includes, in case of a communication network operating according to GSM, one or more SGSNs (Serving GPRS (General Packet Radio Service) Support Nodes) and one or more GGSN (Gateway GPRS Support Nodes).

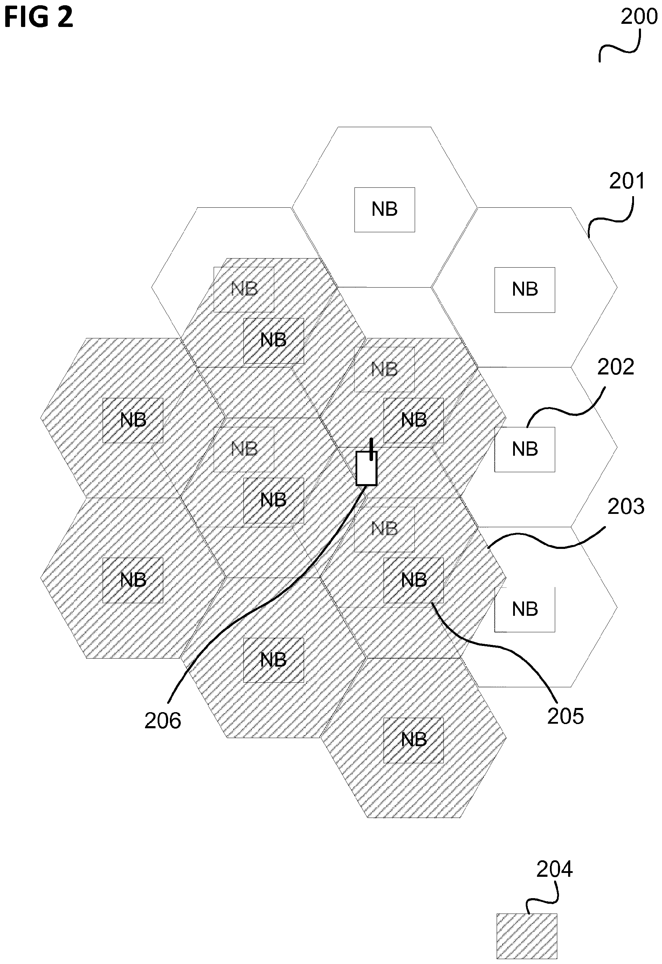

The mobile terminal 105 may be within the coverage area of more than one mobile communication networks which may operate according to the same RAT or according to different RATs. This is illustrated in figure 2.

Figure 2 shows a radio cell arrangement 200 including radio cells of two communication networks.

The radio cell arrangement 200 includes a first plurality of radio cells 201 (shown without hatching) operated by a plurality of first base stations 202 of a first communication network (e.g. LTE base stations eNB), and a second plurality of radio cells 203 indicated by a hatching 204 operated by a plurality of second base stations 205 of a second communication network (e.g. of a different RAT, e.g. GSM base stations BTS).

As illustrated, the second plurality of radio cells 203 overlaps the first plurality of radio cells 201 such that a mobile terminal 206, e.g. corresponding to mobile terminal 105, located in the overlapping area may connect to both the first communication network and the second communication network, e.g. may both register with a base station 202 of the first communication network and a base station 205 of the second communication network. In particular, the mobile terminal 206 may perform a handover or a reselection from one cell of one of the communication networks to another cell of the communication network (i.e. within the same RAT) or to a radio cell of the other communication network (i.e. perform an inter-RAT handover or reselection).

Mobility mechanisms in both RAT and inter-RAT handovers require finding and measuring the radio cells on different RATs quickly. Smooth execution of such mechanisms typically directly leads to good user experience. Sustained battery life for mobile devices is typically a very important parameter. Running many background tasks (cell searches, power measurements etc.) exhaustively drains the battery power quickly destroying the user experience.

Measuring a radio cell means that the quality of a radio cell (typically a neighboring cell) is determined by a mobile terminal. For this, the mobile terminal synchronizes with the radio cell and measures its signal quality, i.e. the signal quality of signals emitted by the base station operating the radio cell for operation of the radio cell. The signal quality may for example be represented by the signal-to-interference-plus-noise ratio (SINR). The mobile terminal may for example perform a measurement of a reference signal of a radio cell (i.e. emitted by a base station operating the radio cell) and determine one or more of the Reference Signal Received Power (RSRP), the Received Signal Strength Indicator (RSSI) and the Reference Signal Received Quality (RSRQ) of the reference signal.

A modern wireless device may, as mentioned above for the mobile terminal 206, be able to communicate with multiple RATs. In many scenarios, when a device is moving to the border of the coverage region of a specific RAT or due to some network (NW) decisions (i.e. radio access network 101) as a result of load balancing and access control, the device may receive a NW request to find cells on another RAT. Upon reception of this request, the device has to find the cells on the new RAT, make measurements of some key indicators and report to the NW.

The term "cell search" and "cell search procedure" is used to refer to the combined procedure of the measurement, evaluation and detection process of one or more radio cells. This can be seen to be very tightly related to the cell selection or reselection process because the mobile terminal typically goes through the cell search procedure first before it goes through the cell selection.

In the following, it is assumed that the first plurality of radio cells 201 are radio cells of a first communication network operating according to a radio access technology offering relatively high data rates such as 5G, LTE or UMTS, while the second plurality of radio cells 203 are radio cells of a communication network operating according to a radio access technology offering relatively low data rates such as GSM.

When the mobile terminal 206 has a voice call and leaves the coverage area of a radio cell 201, a handover may be performed to both a radio cell 201 of the first communication network as well as to a radio cell 203 of the second communication network because both communication networks can support voice calls. This means that both communication networks may provide radio access for the UE 206 which is sufficient to have a voice call between the UE 206 and, for example, another UE.

However, in case the mobile terminal 206 is a data centric device or a device running a data centric application, it may require high data rates and possibly the expected functionality or user experience cannot be provided when the devices operates in (i.e. is provided radio access by) a low data rate Radio Access Technology (RAT) such as GSM.

Hence for a data centric device or application, it is typically more important to keep providing the mobile terminal 206 with radio access (i.e. a connection to a communication network) at a high data rate RAT than to avoid a short loss of radio access because a handover to GSM may impact the mobile terminal's functionality (e.g. a data-centric application run by the mobile terminal) as much as a loss of connection (i.e. a loss of radio access).

In addition, GSM inter-RAT measurements performed during a data connection (e.g. for a data transfer) which uses a high data rate RAT (e.g. 5G, LTE or UMTS) typically reduces the available data rate for the data connection, because for performing measurements of GSM radio cells, the transceiver 111 needs to be tuned to the desired GSM frequencies (of the GSM radio cells to be measured) and back again. The measurement typically also introduce mobility delays and latency within the currently used high data rate RAT or for a handover from one high data rate RAT to another high data rate RAT. While a mobile terminal may be constructed to perform GSM inter-RAT measurements in parallel to a high data rate RAT connection (i.e. in gapless fashion), such a mobile terminal typically has higher costs (i.e. a higher bill of materials BOM) than a mobile terminal that requires radio gaps for GSM inter-RAT measurements.

On the other hand, many communication networks operating according to high data rate RATs do not provide sufficient coverage to ensure sufficient mobility for voice centric device or applications. For example, mobility may be restricted when a user moves with his mobile terminal into or within buildings or from hotspots into rural areas if using only high data rate RATs. Accordingly, mobility from high data rate RATs to 2G networks such as GSM is important to provide expected user experience for voice centric devices or applications.

In view of the above, according to various examples, a mobile terminal 105, 206 ignores, reduces or delays performing GSM (or generally low data rate network) inter-RAT measurements configured by the network side (i.e. of the current network, i.e. the communication network currently serving the mobile terminal, i.e. currently providing radio access for the mobile terminal) when the mobile terminal is configured for data centric behavior only or while no voice centric application is running on the mobile terminal (e.g. while the mobile terminal has no voice call).

The mobile terminal may resume performing GSM inter-RAT measurements (e.g. when configured by the network side) as soon as a voice centric application is executed on the mobile terminal (e.g. a VoLTE (Voice over LTE) or VoNR (Voice over NR) call gets established or the mobile terminal has lost or is very close to losing its connection to the current network.

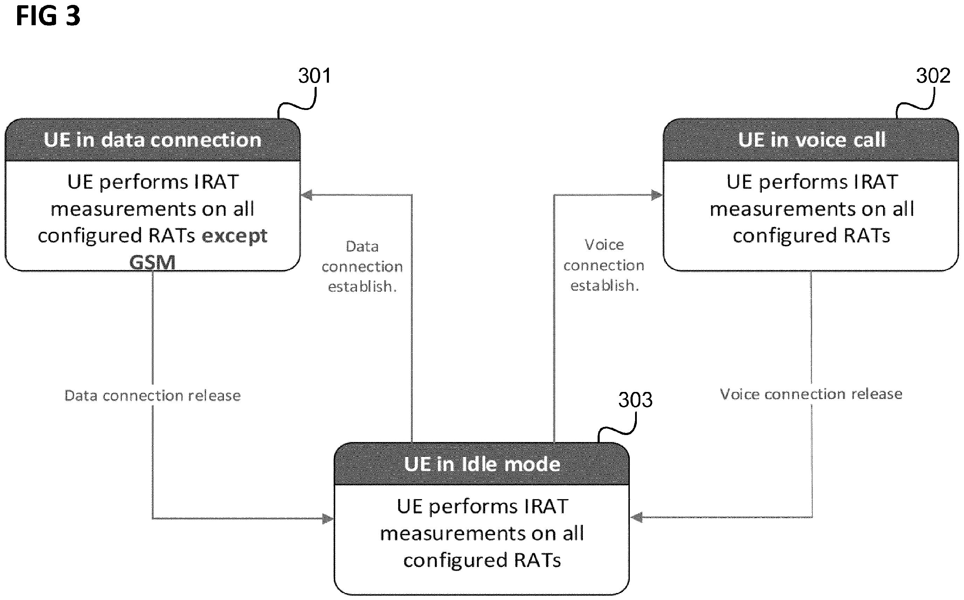

Figure 3 shows an example of an operation of a mobile terminal.

In figure 3, which can be seen to depict a state machine with respect to 2G (Second Generation, e.g. GSM) inter-RAT measurements, three states are differentiated: a first state 301 in which the mobile terminal (e.g. a UE) has a data connection, a second state 302 in which the mobile terminal has voice call and a third state 303 in which the mobile terminal is in idle mode. It should be noted that the second state 302 may include the case that the mobile terminal has a voice call as well as a data connection. Accordingly, the first state 301 may mean that the mobile terminal does not have a voice call.

A voice call may be understood as a communication connection for transmission of speech data in real-time, i.e. for a conversation between two users that is taking place via the voice call. A data connection may be understood as connection for transmission of useful data other than speech data for a conversation currently taking place, e.g. a file download such as a video download or also a streaming of e.g. a video. In the following examples, a data connection may usually be understood as a connection which has higher data rate (i.e. data throughput) requirements than a voice call.

The mobile terminal transitions from the third state 303 to the first state 301 when it establishes a data connection and back when it releases the (or all) data connection(s). The mobile terminal transitions from the third state 303 to the second state 302 when it establishes a voice connection and back when it releases the (or all) voice connection(s). In case that the second state 302 may include the case that the mobile terminal has a voice call as well as a data connection, the mobile terminal transitions from the first state 301 to the second state 302 in case it establishes a voice connection and back to the first state 301 when it releases the (or all) voice connection(s) but keeps a data connection or to the third state 303 when it releases all connections (i.e. becomes idle).

In the example of figure 3, in the first state 301, the mobile terminal performs inter-RAT measurements for all RATs for which it is configured except GSM (or generally 2G RATs). In the second state 302, the mobile terminal performs inter-RAT measurements for all RATs for which it is configured (including GSM). In the third state 303 the mobile terminal performs inter-RAT measurements for all RATs for which it is configured.

It should be noted that the deactivation of 2G measurements (as in the first state 302) is not limited to connected mode but may also be extended to idle mode, possibly with additional conditions. For example, GSM measurements may also be deactivated in the third state 303, e.g. in case the mobile terminal is configured as data-centric device.

According to various examples, to deactivate (and thus avoid) the 2G inter-RAT measurements (e.g. in the first state 301 and possibly also in the third state 303), the mobile terminal ignores instructions from the network side to perform 2G inter-RAT measurements. Alternatively, to deactivate 2G inter-RAT measurements, e.g. in case that it is configured for data centric applications or while it only uses data centric applications, the mobile terminal may indicate to the network side that it does not support 2G (e.g. GSM) inter-RAT measurements such that the network will not instruct it to perform measurements.

2G inter-RAT measurements can be seen to be performed based on a priority of a the 2G RAT with respect to a high data rate RAT (3G, 4G or 5G RAT such as UMTS, LTE or 5G RAT). If the mobile terminal has a voice call or is configured as voice-centric, the 2G RAT can be seen to be prioritized over the high data rate RAT, meaning that the mobile terminal performs 2G RAT measurements (taking into account the negative impact on the high data rate RAT). If the mobile terminal has no voice call and a data connection or is configured as data-centric, the high data rate RAT can be seen to be prioritized over the 2G RAT, meaning that the mobile terminal does not perform 2G RAT measurements (and thus avoiding negative impact on the high data rate RATs by the 2G RAT measurements). Prioritizing the high data RAT can be seen as prioritizing a connection using a high data rate RAT over the risk of a short loss of radio access.

The mobile terminal may decide about the prioritization, i.e. whether to prioritize the 2G RAT or the high data rate RAT for example based on at least one of which applications are running on the mobile terminal and a device configuration or device type, possibly without any additional network signaling or specific modem capabilities.

Deactivating 2G inter-RAT measurements, e.g. as described above, allow a mobile terminal to maintain high data rates in data connections since it can be avoided that a data connection is interrupted by 2G measurements. This allows enhancing mobile terminal performance and end user experience. Further, the mobile terminal may save power since less measurements gaps need to be used for executing IRAT measurements. Measurement gaps saved in this manner can be used for increasing sleep durations of the mobile terminal. Furthermore, using less measurements gaps to execute the 2G measurements allows performing measurements for high data rate RATs (e.g. 3G, 4G or 5G) more frequently, thus allowing the mobile terminal to detect suitable high data rate RAT cells faster which leads to better mobility for the high data rate RATs. Additionally, since measurement gaps do not need to be distributed to 2G, the measurement gap distribution between the RATs to be measured is easier.

A mobile terminal may be statically configured to perform or avoid performing 2G inter-RAT measurements. For example, at its production, a mobile terminal may be configured to have a certain device type, e.g. as a device of a type that only supports data centric applications (such as live streaming action camera) and thus avoid performing 2G inter-RAT measurements. Also, a user interface of the mobile terminal may allow a user to configure the measurement circuit to perform or avoid performing 2G inter-RAT measurements by a corresponding user setting or user preference.

Whether a mobile terminal performs or avoids performing 2G inter-RAT measurements may also be controlled (and change) dynamically, e.g. based on the active (foreground) applications running on the mobile terminal or based on judging that the mobile terminal behaves data centric (and thus 2G inter-RAT measurements should be avoided) until a voice connection gets established (e.g. a mobile terminated or mobile originated call).

The mobile terminal may include a controller which controls the transceiver 111 of the mobile terminal to perform or avoid performing 2G inter-RAT measurements. The controller may for example detect whether a voice centric application is running on the mobile terminal, e.g. by the use of a modem audio system of the moble terminal or based on a specific registration function that allows voice centric applications to enforce the mobile terminal to perform GSM inter-RAT measurements when configured by the network.

According to various examples, the controller uses mobile terminal usage settings, e.g. UE usage settings as defined by 3GPP to decide whether to control the transceiver 111 to perform 2G inter-RAT measurements. In the following example, LTE is used as example for a high data rate RAT but it may also be any other applicable high data rate RAT such as 5G RAT. Similarly, GSM and 2G are only examples and any low data rate RAT may be used. A low data rate RAT may in this context be understood as a RAT supporting at most data connections at a low data rate e.g. at a data rate supporting real-time speech data transmission for a voice call.

The controller considers the UE usage setting stored in a memory of the mobile terminal, i.e. considers UE usage setting information, to decide whether to perform 2G inter-RAT measurements, allowing enhancing the performance and reducing power consumption of data centric devices.

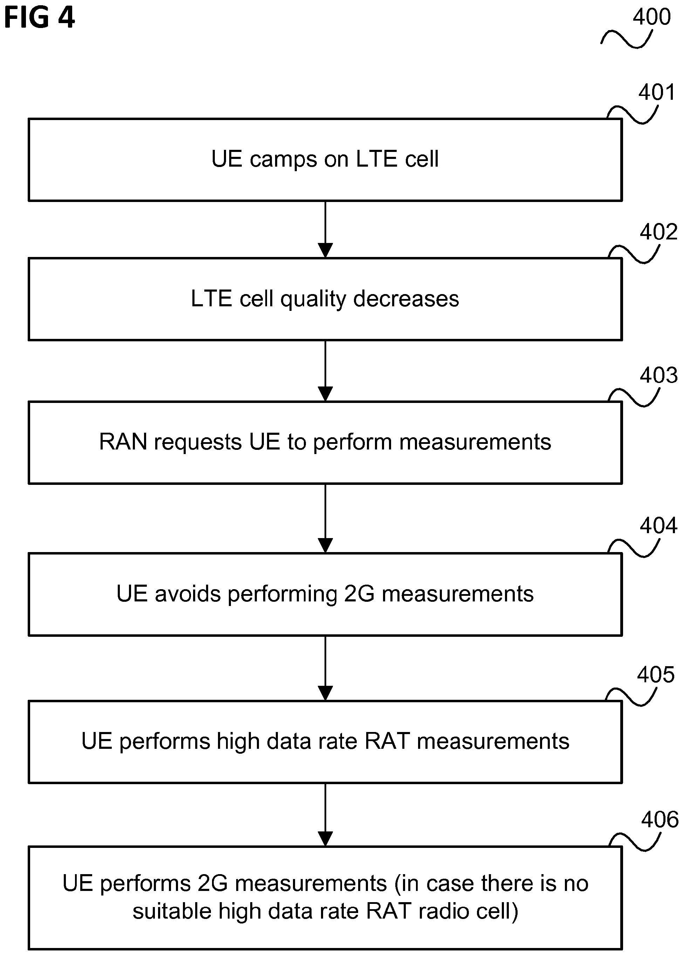

Figure 4 shows a flow diagram 400 illustrating an example for controlling whether or not to perform 2G inter-RAT measurements.

In 401, a UE is camping on an LTE radio cell, connected to an LTE communication network and performing a data transfer via a data connection.

In 402, the radio cell (reception) quality decreases at the mobile terminal.

In 403, the eNB operating the radio cell requests the UE to provide a measurement report for all neighbor radio cells of the radio cell for all RATs (for which the UE is configured).

In 404, the controller determines that the UE is configured for data centric behavior or only data centric applications are running on the UE and that the UE keeps the connection to the current serving radio cell and that neighbor radio cells have been detected operating according to one or more non-GSM RATs. Therefore, the controller controls the UE's transceiver to not perform any of the requested GSM inter-RAT measurements.

In 405, the UE performs IRAT measurements to measure radio cells operating according to non-GSM RATs (e.g. NR, LTE or 3G).

In 406, when the UE is about to lose connection to the current serving cell (detected depending on power and/or quality thresholds) and has not found a suitable non-GSM radio cell to provide radio access, the UE prioritizes the configured GSM inter-RAT measurements with respect to the non-GSM measurements to avoid a long interruption of the connection to the network.

It should be noted that following 403, the UE may also at first start performing measurements on all configured RATs (including GSM) and stop performing the GSM measurements based on a decision by the controller, e.g. if the UE has detected non-GSM radio cells (which might be suitable for a handover such that a GSM cell is not necessary). The mobile terminal may in 406 resume the GSM inter-RAT measurements if the UE is about to lose radio access (e.g. if no suitable non-GSM radio cell has been found after all).

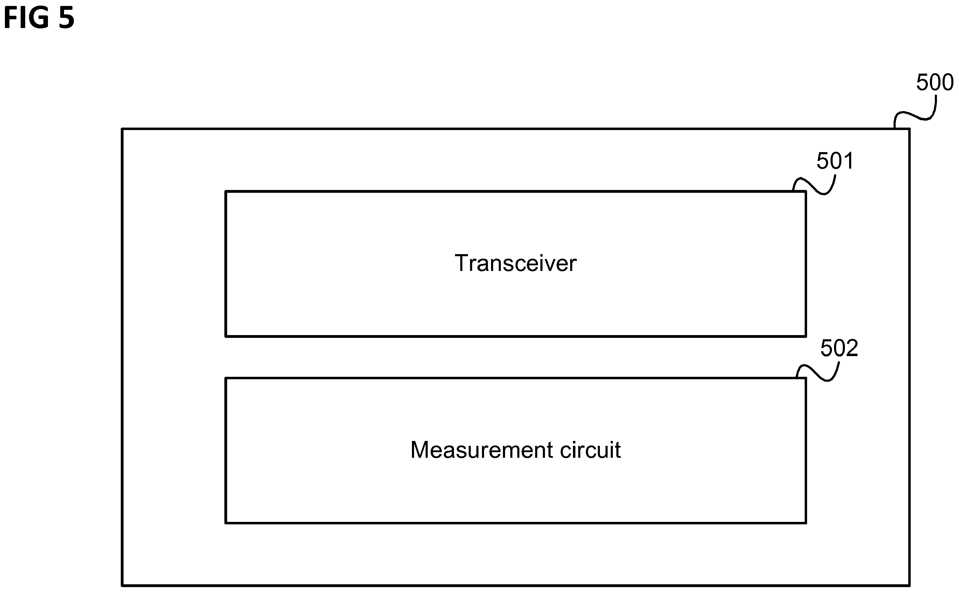

In summary, according to various examples, a mobile communication terminal as illustrated in figure 5 is provided.

Figure 5 shows a mobile communication terminal 500.

The mobile communication terminal 500 includes a transceiver 501 configured to be operable (e.g. configured to support communication) according to a first radio access technology and at least a second radio access technology (e.g. one or more second radio access technologies).

The mobile communication terminal 500 further includes a measurement circuit 502 configured to perform radio cell measurements for the first radio access technology depending on a priority of the first radio access technology with respect to the second radio access technology.

According to various examples, in other words, a mobile (communication) terminal performs measurements for a first radio access technology depending whether it is prioritized over one or more second radio access technologies or whether the one or more second radio access technologies are prioritized over the first radio access technology. This means that the mobile terminal may avoid measurements for a certain RAT under certain conditions, e.g. based on whether the mobile terminal has an established voice call for which the RAT may be needed.

For example, the mobile terminal only performs measurements for the first radio access technology if it is prioritized over the one or more second radio access technologies while it deactivates performing measurements for the first radio access technology if the one or more second radio access technologies are prioritized over the first radio access technology.

For deactivating performing measurements, the mobile terminal may for example ignore instructions to perform the measurements which it has received from a communication network (e.g. its current serving network).

For example, while the mobile (communication) terminal is configured for data centric use or only data centric applications are running on the mobile terminal, keeping a connection to a high data rate RAT is prioritized over ensuring radio access (e.g. a connection to the network side at all). Inter-RAT measurements on a lower data rate RAT (e.g. GSM) are for example not performed as long as a connection to a high data rate RAT can be achieved. When a voice centric application is running on the mobile terminal, the mobile terminal may perform measurements on GSM (or other low data rate RATs) as configured by the network.

The first radio access technology, e.g. a 2G RAT, may for example be prioritized over the second radio access technologies (e.g. NR, LTE and 3G RATs) if (and for example only if) the mobile communication terminal has not found any suitable radio cells operating according to the second RATs for providing continued radio access and risks to lose radio access. The UE may thus for example only perform 2G measurements if it has not detected any NR, LTE or 3G radio cells.

It should be noted that the measurement circuit may be part of the transceiver. Further, the communication terminal may include a controller configured to control the operation of the measurement circuit. The transceiver may for example be (or be part of) a communication subsystem including a baseband processor and an RF (Radio Frequency) transceiver. It may for example correspond to the RF transceiver of the communication subsystem.

The mobile communication terminal may have a determiner configured to determine whether the second radio access technology should be prioritized over the first radio access technology. The measurement circuit may be configured to perform radio cell measurements for the first radio access technology depending on whether the second radio access technology should be prioritized over the first radio access technology. For example, the measurement circuit is configured to avoid radio cell measurements for the first radio access technology if the second radio access technology should be prioritized over the first radio access technology.

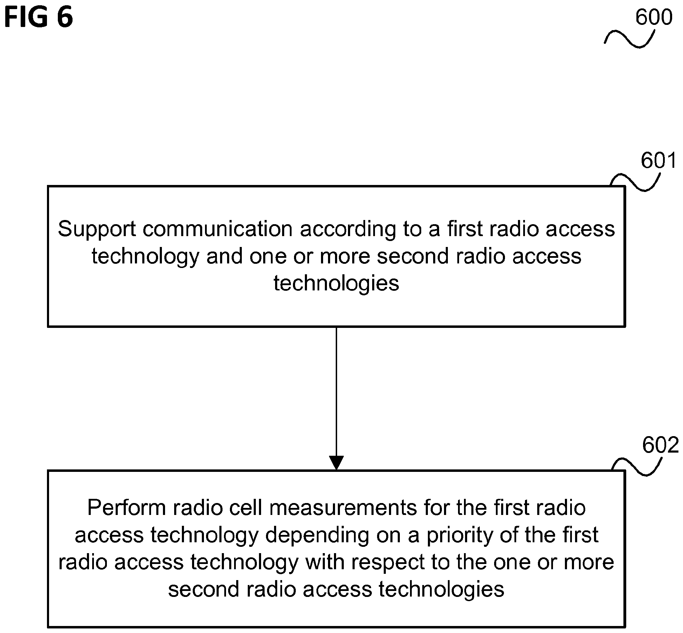

The mobile communication terminal 500 for example carries out a method as illustrated in figure 6.

Figure 6 shows a method for performing radio cell measurements, for example performed by a mobile communication terminal.

In 601, the mobile communication terminal is operable (e.g. supports communication) according to a first radio access technology and at least a second radio access technology. This may for example include configuring the communication terminal, e.g. a transceiver of the communication terminal, to be operable according to a first radio access technology and at least a second radio access technology (e.g. one or more second radio access technologies).

In 602, the mobile communication terminal performs radio cell measurements for the first radio access technology depending on a priority of the first radio access technology with respect to the at least a second radio access technology.

The components of the mobile communication terminal (e.g. the transceiver and the measurement circuit or also a possible controller or determiner) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The mobile communication terminal may for example be at least partially implemented by a transceiver which may for example be at least partially implemented by one or more modems (e.g. GSM, UMTS, LTE or 5G modems), a baseband processor or other transceiver components or also by an application processor. The mobile communication terminal may include typical communication terminal devices such as a transceiver (including e.g. a baseband processor, one or more filters, transmit chains, receive chains, amplifiers etc.), an antenna, a subscriber identity module, an application processor, a memory etc.

While specific aspects have been described, it should be understood by those skilled in the art that various changes in form and detail may be made therein without departing from the scope of the aspects of this disclosure as defined by the appended claims. The scope is thus indicated by the appended claims and all changes which come within the meaning of the claims are therefore intended to be embraced

## Claims

1. A mobile communication terminal (500) comprising:
a transceiver (501) configured to be operable according to a first radio access technology and at least a second radio access technology, wherein the first radio access technology supports voice calling and the second radio access technology supports data connectivity;
a measurement circuit (502) configured to perform radio cell measurements for the first radio access technology depending on a priority of the first radio access technology with respect to the at least a second radio access technology, wherein the measurement circuit (502), in response to a decrease in reception quality of a cell associated with the second radio access technology, is configured to not perform radio cell measurements for the first radio access technology when the mobile communication terminal (500) has a data connection associated with the second radio access technology.

2. The mobile communication terminal (500) of claim 1, comprising a controller configured to decide whether to set the priority of the first radio access technology with respect to the at least a second radio access technology.

3. The mobile communication terminal (500) of claim 2, wherein the controller is configured to either prioritize the first radio access technology over the at least a second radio access technology or the at least a second radio access technology over the first radio access technology by setting the priority of the first radio access technology with respect to the at least a second radio access technology or not.

4. The mobile communication terminal (500) of any one of claims 1 to 3, wherein the measurement circuit (502) is configured to perform radio cell measurements for the first radio access technology when the first radio access technology is prioritized over the at least a second radio access technology.

5. The mobile communication terminal (500) of claim 2 or 3, wherein the controller is configured to prioritize the first radio access technology with respect to the at least a second radio access technology when the mobile communication terminal (500) has a voice call over the first radio access technology.

6. The mobile communication terminal (500) of any one of claims 1 to 5, the measurement circuit (502) is configured to perform radio cell measurements for the first radio access technology when the mobile communication terminal (500) has a voice call over the first radio access technology.

7. The mobile communication terminal (500) of claim 2, 3 or 5, wherein the controller is configured to prioritize the at least a second radio access technology with respect to the first radio access technology when the mobile communication terminal (500) has no voice call over the first radio access technology.

8. The mobile communication terminal (500) of claim 2, 3 or 5, wherein the controller is configured to prioritize the at least a second radio access technology with respect to the first radio access technology when the mobile communication terminal (500) has no voice call over the first radio access technology and has a data connection over one of the at least a second radio access technology.

9. The mobile communication terminal (500) of claim 2, wherein the controller is configured to prioritize the at least a second radio access technology with respect to the first radio access technology when the mobile communication terminal (500) has a data connection over one of the at least a second radio access technology.

10. The mobile communication terminal (500) of claim 1, wherein said not performing radio cell measurements for the first radio access technology occurs in response to (a) said decrease in reception quality, (b) a determination that the mobile communication terminal (500) is configured for data centric behavior, (c) a determination that neighbor radio cells have been detected operating according to one or more non-GSM RATs.

11. The mobile communication terminal (500) of claim 1, wherein the controller is configured to receive, from a base station, a request for the mobile communication terminal (500) to provide a measurement report for neighbor radio cells for all configured RATs, wherein the second radio access technology supports a higher data rate than the first radio access technology.

12. The mobile communication terminal (500) of claim 1, further comprising:
one or more antennas (112) coupled to the transceiver (501), wherein the transceiver is implemented at least partially by a baseband processor.

13. A method for operating a mobile communication terminal (500), the method comprising:
supporting communication according to a first radio access technology and at least a second radio access technology, wherein the first radio access technology supports voice calling and the second radio access technology supports data connectivity; and
performing radio cell measurements for the first radio access technology depending on a priority of the first radio access technology with respect to the at least a second radio access technology, wherein, in response to a decrease in reception quality of a cell associated with the second radio access technology, radio cell measurements are not performed for the first radio access technology when the mobile communication terminal (500) has a data connection associated with the second radio access technology.

14. The method of claim 13, wherein the first radio access technology is a Global System for Mobile Communication, GSM, radio access technology, wherein the second radio access technology is a Long Term Evolution, LTE, radio access technology.

15. The method of claim 13, further comprising:
receiving an instruction from a communication network prior to said decrease in reception quality of the cell, wherein the instruction directs the mobile communication terminal (500) to perform radio cell measurements for the first radio access technology.

## Patentansprüche

1. Mobilkommunikationsendgerät (500), umfassend:
einen Sendeempfänger (501), der konfiguriert ist, um gemäß einer ersten Funkzugangstechnologie und mindestens einer zweiten Funkzugangstechnologie betreibbar zu sein, wobei die erste Funkzugangstechnologie Sprachanrufe unterstützt und die zweite Funkzugangstechnologie Datenkonnektivität unterstützt;
eine Messschaltung (502), die konfiguriert ist, um Funkzellenmessungen für die erste Funkzugangstechnologie in Abhängigkeit von einer Priorität der ersten Funkzugangstechnologie in Bezug auf die mindestens eine zweite Funkzugangstechnologie durchzuführen, wobei die Messschaltung (502) als Reaktion auf eine Abnahme der Empfangsqualität einer Zelle, die mit der zweiten Funkzugangstechnologie assoziiert ist, konfiguriert ist, um keine Funkzellenmessungen für die erste Funkzugangstechnologie durchzuführen, wenn das Mobilkommunikationsendgerät (500) eine Datenverbindung aufweist, die mit der zweiten Funkzugangstechnologie assoziiert ist.

2. Mobilkommunikationsendgerät (500) nach Anspruch 1, umfassend eine Steuerung, die konfiguriert ist, um zu entscheiden, ob die Priorität der ersten Funkzugangstechnologie in Bezug auf die mindestens eine zweite Funkzugangstechnologie eingestellt werden soll.

3. Mobilkommunikationsendgerät (500) nach Anspruch 2, wobei die Steuerung konfiguriert ist, um entweder die erste Funkzugangstechnologie gegenüber der mindestens einen zweiten Funkzugangstechnologie oder die mindestens eine zweite Funkzugangstechnologie gegenüber der ersten Funkzugangstechnologie zu priorisieren, indem die Priorität der ersten Funkzugangstechnologie in Bezug auf die mindestens eine zweite Funkzugangstechnologie eingestellt wird oder nicht.

4. Mobilkommunikationsendgerät (500) nach einem der Ansprüche 1 bis 3, wobei die Messschaltung (502) konfiguriert ist, um Funkzellenmessungen für die erste Funkzugangstechnologie durchzuführen, wenn die erste Funkzugangstechnologie gegenüber der mindestens einen zweiten Funkzugangstechnologie priorisiert ist.

5. Mobilkommunikationsendgerät (500) nach Anspruch 2 oder 3, wobei die Steuerung konfiguriert ist, um die erste Funkzugangstechnologie in Bezug auf die mindestens eine zweite Funkzugangstechnologie zu priorisieren, wenn das Mobilkommunikationsendgerät (500) einen Sprachanruf über die erste Funkzugangstechnologie hat.

6. Mobilkommunikationsendgerät (500) nach einem der Ansprüche 1 bis 5, wobei die Messschaltung (502) konfiguriert ist, um Funkzellenmessungen für die erste Funkzugangstechnologie durchzuführen, wenn das Mobilkommunikationsendgerät (500) einen Sprachanruf über die erste Funkzugangstechnologie hat.

7. Mobilkommunikationsendgerät (500) nach Anspruch 2, 3 oder 5, wobei die Steuerung konfiguriert ist, um die mindestens eine zweite Funkzugangstechnologie in Bezug auf die erste Funkzugangstechnologie zu priorisieren, wenn das Mobilkommunikationsendgerät (500) keinen Sprachanruf über die erste Funkzugangstechnologie hat.

8. Mobilkommunikationsendgerät (500) nach Anspruch 2, 3 oder 5, wobei die Steuerung konfiguriert ist, um die mindestens eine zweite Funkzugangstechnologie in Bezug auf die erste Funkzugangstechnologie zu priorisieren, wenn das Mobilkommunikationsendgerät (500) keinen Sprachanruf über die erste Funkzugangstechnologie hat und eine Datenverbindung über eine der mindestens einen zweiten Funkzugangstechnologie hat.

9. Mobilkommunikationsendgerät (500) nach Anspruch 2, wobei die Steuerung konfiguriert ist, um die mindestens eine zweite Funkzugangstechnologie in Bezug auf die erste Funkzugangstechnologie zu priorisieren, wenn das Mobilkommunikationsendgerät (500) eine Datenverbindung über eine der mindestens einen zweiten Funkzugangstechnologie hat.

10. Mobilkommunikationsendgerät (500) nach Anspruch 1, wobei das Nichtdurchführen von Funkzellenmessungen für die erste Funkzugangstechnologie als Reaktion erfolgt auf (a) die Abnahme der Empfangsqualität, (b) eine Bestimmung, dass das Mobilkommunikationsendgerät (500) für datenzentriertes Verhalten konfiguriert ist, (c) eine Bestimmung, dass Nachbarfunkzellen erfasst wurden, die gemäß einer oder mehreren Nicht-GSM-RATs betrieben werden.

11. Mobilkommunikationsendgerät (500) nach Anspruch 1, wobei die Steuerung konfiguriert ist, um von einer Basisstation eine Anforderung für das Mobilkommunikationsendgerät (500) zu empfangen, einen Messbericht für Nachbarfunkzellen für alle konfigurierten RATs bereitzustellen, wobei die zweite Funkzugangstechnologie eine höhere Datenrate als die erste Funkzugangstechnologie unterstützt.

12. Mobilkommunikationsendgerät (500) nach Anspruch 1, ferner umfassend:
eine oder mehrere Antennen (112), die mit dem Sendeempfänger (501) gekoppelt sind, wobei der Sendeempfänger mindestens teilweise durch einen Basisbandprozessor implementiert ist.

13. Verfahren zum Betreiben eines Mobilkommunikationsendgeräts (500), wobei das Verfahren umfasst:
Unterstützen von Kommunikation gemäß einer ersten Funkzugangstechnologie und mindestens einer zweiten Funkzugangstechnologie, wobei die erste Funkzugangstechnologie Sprachanrufe unterstützt und die zweite Funkzugangstechnologie Datenkonnektivität unterstützt; und
Durchführen von Funkzellenmessungen für die erste Funkzugangstechnologie in Abhängigkeit von einer Priorität der ersten Funkzugangstechnologie in Bezug auf die mindestens eine zweite Funkzugangstechnologie, wobei als Reaktion auf eine Abnahme der Empfangsqualität einer Zelle, die mit der zweiten Funkzugangstechnologie assoziiert ist, Funkzellenmessungen nicht für die erste Funkzugangstechnologie durchgeführt werden, wenn das Mobilkommunikationsendgerät (500) eine Datenverbindung aufweist, die mit der zweiten Funkzugangstechnologie assoziiert ist.

14. Verfahren nach Anspruch 13, wobei die erste Funkzugangstechnologie eine Global System for Mobile Communication-, GSM-, Funkzugangstechnologie ist, wobei die zweite Funkzugangstechnologie eine Long Term Evolution-, LTE-, Funkzugangstechnologie ist.

15. Verfahren nach Anspruch 13, ferner umfassend:
Empfangen einer Anweisung von einem Kommunikationsnetz vor der Abnahme der Empfangsqualität der Zelle, wobei die Anweisung das Mobilkommunikationsendgerät (500) anweist, Funkzellenmessungen für die erste Funkzugangstechnologie durchzuführen.

## Revendications

1. Un terminal de communication mobile (500) comprenant :
un émetteur/récepteur (501) configuré pour pouvoir opérer selon une première technologie d'accès radio et au moins une seconde technologie d'accès radio, la première technologie d'accès aradio prenant en charge les appels vocaux et la seconde technologie d'accès radio prenant en charge la connectivité des données ;
un circuit de mesure (502) configuré pour effectuer des mesures de cellule radio pour la première technologie d'accès radio en fonction d'une priorité de la première technologie d'accès radio par rapport à l'au moins une seconde technologie d'accès radio, le circuit de mesure (502) étant configuré pour, en réponse à une baisse de qualité de réception d'une cellule associée à la seconde technologie d'accès radio, ne pas effectuer de mesure de cellule radio pour la première technologie d'accès radio lorsque le terminal de communication mobile (500) a une connexion de données associée à la seconde technologie d'accès radio.

2. Le terminal de communication mobile (500) de la revendication 1, comprenant un contrôleur configuré pour détecter s'il y a ou non lieu d'établir la priorité de la première technologie d'accès radio par rapport à l'au moins une seconde technologie d'accès radio.

3. Le terminal de communication mobile (500) de la revendication 2, dans lequel le contrôleur est configuré pour donner la priorité soit à la première technologie d'accès radio sur l'au moins une seconde technologie d'accès radio, soit à l'au moins une seconde technologie d'accès radio sur la première technologie d'accès radio, par établissement ou non de la priorité de la première technologie d'accès radio par rapport à l'au moins une technologie d'accès radio.

4. Le terminal de communication mobile (500) de l'une des revendications 1 à 3, dans lequel le circuit de mesure (502) est configuré pour effectuer des mesures de cellule radio pour la première technologie d'accès radio lorsque la première technologie d'accès radio a la priorité sur l'au moins une seconde technologie d'accès radio.

5. Le terminal de communication mobile (500) de la revendication 2 ou 3, dans lequel le contrôleur est configuré pour donner la priorité à la première technologie d'accès radio par rapport à l'au moins une seconde technologie d'accès radio lorsque le terminal de communication mobile (500) a un appel vocal sur la première technologie d'accès radio.

6. Le terminal de communication mobile (500) de l'une des revendications 1 à 5, dans lequel le circuit de mesure (502) est configuré pour effectuer des mesures de cellule radio pour la première technologie d'accès radio lorsque le terminal de communication mobile (500) a un appel vocal sur la première technologie d'accès radio.

7. Le terminal de communication mobile (500) de la revendication 2, 3 ou 5, dans lequel le contrôleur est configuré pour donner la priorité à l'au moins une seconde technologie d'accès radio par rapport à la première technologie d'accès radio lorsque le terminal de communication mobile (500) n'a pas d'appel vocal sur la première technologie d'accès radio.

8. Le terminal de communication mobile (500) de la revendication 2, 3 ou 5, dans lequel le contrôleur est configuré pour donner la priorité à l'au moins une seconde technologie d'accès radio par rapport à la première technologie d'accès radio lorsque le terminal de communication mobile (500) n'a pas d'appel vocal sur la première technologie d'accès radio et a une connexion de données sur l'une de l'au moins une seconde technologie d'accès radio.

9. Le terminal de communication mobile (500) de la revendication 2, dans lequel le contrôleur est configuré pour donner la priorité à l'au moins une seconde technologie d'accès radio par rapport à la première technologie d'accès radio lorsque le terminal de communication mobile (500) a une connexion de données sur l'une de l'au moins une seconde technologie d'accès radio.

10. Le terminal de communication mobile (500) de la revendication 1, dans lequel le fait de ne pas effectuer de mesure de cellule radio pour la première technologie d'accès radio a lieu en réponse à (a) ladite baisse de la qualité de réception, (b) une détermination que le terminal de communication mobile (500) est configuré pour un comportement centré sur les données, (c) une détermination que l'on a détecté des cellules radio voisines qui opèrent selon une ou plusieurs RAT qui ne sont pas du GSM.

11. Le terminal de communication mobile (500) de la revendication 1, dans lequel le contrôleur est configuré pour recevoir en provenance d'une station de base une requête pour que le terminal de communication mobile (500) produise une notification de mesure pour des cellules radio voisines pour toutes les RAT configurées, la seconde technologie d'accès radio prenant en charge un débit de données plus élevé que la première technologie d'accès radio.

12. Le terminal de communication mobile (500) de la revendication 1, comprenant en outre :
une ou plusieurs antennes (112) couplées à l'émetteur/récepteur (501), l'émetteur/récepteur étant au moins partiellement implémenté par un processeur de bande de base.

13. Un procédé de mise en œuvre d'un terminal de communication mobile (500), le procédé comprenant :
la prise en charge d'une communication selon une première technologie d'accès radio et au moins une seconde technologie d'accès radio, la première technologie d'accès radio prenant en charge les appels vocaux et la seconde technologie d'accès radio prenant en charge la connectivité des données ;
l'exécution de mesures de cellule radio pour la première technologie d'accès radio en fonction d'une priorité de la première technologie d'accès radio par rapport à l'au moins une seconde technologie d'accès radio, où, en réponse à une baisse de qualité de réception d'une cellule associée à la seconde technologie d'accès radio, les mesures de cellule radio pour la première technologie d'accès radio ne sont pas effectuées lorsque le terminal de communication mobile (500) a une connexion de données associée à la seconde technologie d'accès radio.

14. Le procédé de la revendication 13, dans lequel la première technologie d'accès radio est une technologie d'accès radio de système mondial de communications pour mobiles, GSM, la seconde technologie d'accès radio étant une technologie d'accès radio Évolution à long terme, LTE.

15. Le procédé de la revendication 13, comprenant en outre :
la réception d'une instruction en provenance d'un réseau de communications avant ladite baisse de qualité de réception de la cellule, l'instruction amenant le terminal de communication mobile (500) à effectuer des mesures de cellule radio pour la première technologie d'accès radio.
